Europäisches Patentamt

European Patent Office

Office européen des brevets

(11) Publication number : **0 348 836 B1**

# (12) EUROPEAN PATENT SPECIFICATION

(45) Date of publication of patent specification :
**29.01.92 Bulletin 92/05**

(51) Int. Cl.⁵ : **C03B 37/018**

(21) Application number : **89111450.6**

(22) Date of filing : **23.06.89**

(54) Method of and apparatus for fabricating silica optical fibres.

(30) Priority : **27.06.88 IT 6760588**

(43) Date of publication of application :
**03.01.90 Bulletin 90/01**

(45) Publication of the grant of the patent :
**29.01.92 Bulletin 92/05**

(84) Designated Contracting States :
**DE FR GB NL SE**

(56) References cited :
EP-A- 0 243 010
DE-A- 3 507 727
GB-A- 2 118 320
GB-A- 2 180 832
US-A- 4 233 045

(73) Proprietor : **SIP SOCIETA ITALIANA PER l'ESERCIZIO DELLE TELECOMUNICAZIONI P.A.**
**Via San Dalmazzo, 15**
**I-10122 Torino (IT)**

(72) Inventor : **Cognolato, Livio**
**Strada Bellavista n. 16/5**
**Baldissero Torinese (TO) (IT)**
Inventor : **Parisi, Giuseppe**
**Via Buscaglioni, 2**
**Torino (IT)**

(74) Representative : **Riederer Freiherr von Paar zu Schönau, Anton et al**
**Van der Werth, Lederer & Riederer Freyung 615 Postfach 2664**
**W-8300 Landshut (DE)**

EP 0 348 836 B1

## Description

The present invention relates to industrial manufacture of transmission means for optical telecommunications systems and more particularly it relates to a method of and an apparatus for fabricating silica optical fibres.

Germanium and phosphorus oxides, $GeO_2$ and $P_2O_5$ are nowadays the most widely used dopants to raise silica refraction index. Such dopants, however, present a number of disadvantages. $P_2O_5$ is responsible for an attenuation increase at high wavelengths due to molecular vibrations. In fact its presence gives origin to an absorption band beginning at about 1.3 μm. $GeO_2$, in addition to its high costs due to its scarcity in nature, presents a high volatility at MCVD process working temperatures, which limits its incorporation into the silica matrix.

Owing to the latter disadvantage, a decrease in the refractive index is originated at the centre of the preform core, the so-called "dip", which in case of multi-mode fibres limits their transmission band, while in case of single-mode fibres gives origin to problems if particular refractive indices are required, namely in case of fibres with optimised dispersion between 1.3 and 1.5 μm (dispersion shifted or dispersion flattened).

Alternative silica dopants, other than the above ones, could be : $Al_2O_3$, $ZrO_2$, PbO, $SnO_2$, GaO, $Sb_2O_3$, etc. E.g., alumina $Al_2O_3$ is less volatile at the working temperature of MCVD process and can further raise the total refractive index of fibre core, even though it is implanted in limited concentrations, in fact at a concentration of 15% in weight in the matrix of $SiO_2$, the refractive index passes from 1.4584 to 1.4630, with a 0.3% increase.

However, chemical compounds of metals, such as aluminium, are difficult to handle in MCVD process, since no organic compounds exist which at room temperature have a high vapour pressure and hence can be easily maintained at the gaseous state up to the reaction zone, where the solid is produced for fabricating the optical fibre preform.

An alternative solution could be that of starting from organometallic compounds, such as described in the EP-A-0197561 in the name of the same applicant. Said compounds present at room temperature high vapour pressure, however they are dangerous owing to their tendency to explode in the presence of oxygen.

Various processes of deposition of $Al_2O_3$-$SiO_2$-based matrices for fabricating optical fibres by MCVD technique starting from $AlCl_3$ have been described in the literature.

According to one of these processes, described by J.R. Simpson et al in the article entitled "Optical Fibres with an $Al_2O_3$-doped Silicate Core Composition" issued in Electronics Letters 19.07.1983, 261-

262, $AlCl_3$ is made to sublime directly at 130-180°C in a suitable vessel and is carried through a heated conduit into the reaction zone.

A second process, described in GB-A-2.118.320, resides in producing $AlCl_3$ (or $ZrCl_4$) in a reactor starting from Al (or Zr) and from $Cl_2$ and diluents. The halogen is brought into contact at high temperature with metal wires to yield gaseous halide.

Such processes, however, require the lines and rotating joints be heated to keep the halide at the vapour state from the generator to the reaction zone. Said heated bodies are cumbersome, difficult to maintain and present serious sealing problems in order to avoid pollution in the process reaction and deposition zones.

The above-listed disadvantages are overcome by the process of and apparatus for fabricating silica optical fibres doped with oxide obtained from low vapour pressure reactants, provided by the present invention, which allow metallic halides to be obtained at the vapour state in the reaction chamber without requiring heated lines and joints.

According to the present invention there is provided an apparatus for fabricating alumina-doped silica fibres as described in claim 1 and a process as described in claim 6.

The foregoing and other characteristics of the present invention will be made clearer by the following description of a preferred embodiment thereof, given by way of non-limiting example, and by the annexed drawing which is a schematic representation of the apparatus.

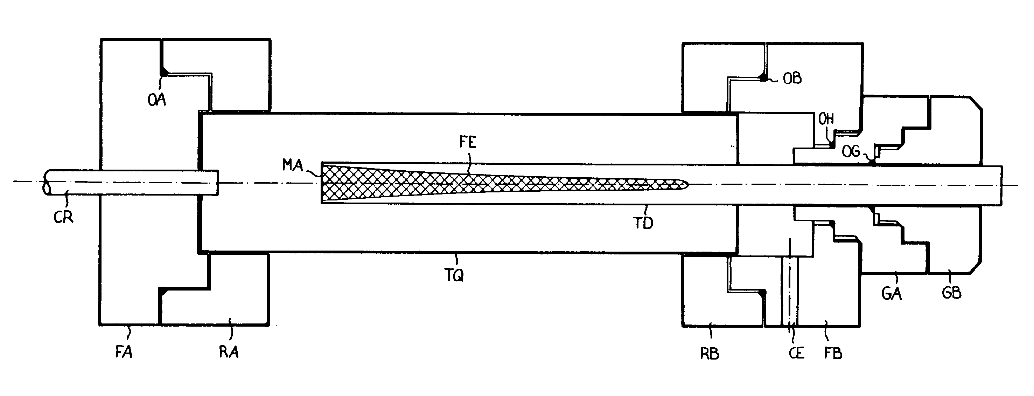

The drawing shows a supporting tube TQ for fabricating an optical fibre preform. Inside tube TQ takes place the reaction among vapour state reactants and the solid produced, generally silica and dopant powder, deposits on the inner surface of said tube. A heat source, not shown in the figure, surrounds an annular zone of the tube and can be axially displaced from right to left so as to start the reaction and cause vitrification of the material deposited along most of the tube. To obtain a uniform deposition tube TQ is also rotated around its axis using two rotating joints, one for injection of the reactants and the other for expulsion of gases depleted.

The rotating joint on the left consists of a rotating part RA and of a fixed part FA wherein a conduit CR is fixed for the injection of reactants. The rotating joint on the right is likewise composed of a rotating part RB and of a fixed part FB wherein conduit CE is obtained for expelling gases depleted and parts of silica and dopant powder, which has not deposited on the inner surface of tube TQ. Two O-rings OA and OB guarantee hermetic seal of the two joints.

According to the invention, a further quartz tube TD is placed inside supporting tube TQ in axial position by two ring nuts GA and GB and possible centering means. Said ring nuts can be screwed onto each other and the interposed O-ring OG can be pressed, which tightens tube TD so as to retain it and guarantee hermetic seal of the reaction chamber. Ring nut GA is in turn screwed onto the fixed part FB of the right joint and is sealed by O-ring OH. This ring nut array facilitates extraction of quartz tube TD so as to allow the necessary maintenance and cleaning operations. Of course, all the parts forming the rotating joints and the ring nuts are made of corrosion resistant materials, e.g. with polytetrafluorethylene or stainless steel.

The diameter of tube TD is much smaller than that of tube TQ and is provided with an axial slit FE. FE is as long as the silica deposition zone and has a width increasing in the direction along which reaction gases flow inside tube TD. Inside the slit there is a wool of high-purity aluminium wires MA, wherethrough a gaseous mixture composed of a halogen, e.g. chlorine, and of helium or another inert gas, is made to flow, so as to obtain at the output the corresponding metallic halide at the gaseous state.

The mixture flow rate is to be such as to maintain the temperature inside the tube TD, in correspondence with the section submitted to heating by the external heat source, inferior to the aluminium melting-temperature, but sufficient to obtain reaction between chlorine and aluminium for yielding $AlCl_3$. A suitable temperature is about 300°C. The amount of $AlCl_3$ can be adjusted by acting on the composition per cent of the gaseous mixture consisting of chlorine and inert gas.

As mentioned, slit FE can have a variable width along tube TD. Which helps compensate the load loss the gaseous mixture finds along the tube, still keeping an output speed sufficient to avoid possible slit clogging due to doped silica powder yielded during the reaction between gaseous state reactants.

Of course, the $AlCl_3$ obtained combines near the inner surface of tube TQ with oxygen to form $Al_2O_3$, used to raise silica refractive index in correspondence with the optical fibre preform core.

It is clear that what described has been given only by way of non-limiting example. Variations and modifications are possible without departing from the scope of the claims.

For instance, among the metals wool MA is made of, Zr, Pb, Sn, Ga, Sb can be used, among the halogens also $I_2$ and $Br_2$ can be used and among halogen compounds $CCl_2F_2$, $CCl_4$, etc can be used.

## Claims

1. An apparatus for fabricating silica optical fibres doped with metal oxides, obtained by synthesis of low vapour pressure reactants, comprising a supporting tube (TQ), wherein the reaction among vapour-state reactants takes place to yield silica and dopants that are deposited on the inner surface of the supporting tube, which is rotated around its axis by two joints composed of a fixed part (FA, FB) and of a rotating part (RA, RB), one for the injection of reactants and the other for the expulsion of gases depleted, and comprising a heat source, which surrounds an annular zone of the supporting tube and which can be axially displaced, characterized in that it comprises a further, inner tube (TD), placed inside the supporting tube (TQ) in coaxial position, whose diameter is much smaller than that of the supporting tube (TQ) and has an axial slit (FE), whose length is equal to that of the silica deposition zone and whose width increases in the direction of the flow inside the inner tube (TD) of a gas mixture arriving from the outside, a high-purity wool (MA) of wires of the metal, whose oxide is desired, being placed inside the inner tube, the gas mixture being such as to react with the metal wool to form metal oxide precursors.

2. An apparatus for fabricating silica optical fibres as claimed in claim 1, characterized in that said inner tube (TD) is mounted on one of said joints by two ring nuts (GA, GB), which are screwed onto each other and press an O-ring (OG) tightening the tube (TD), one of the ring nuts (GA) being in turn screwed onto the fixed part (FB) of the joint and sealed by an O-ring.

3. An apparatus for fabricating silica optical fibres as claimed in claim 1 or 2, characterized in that all the parts composing said joints and ring nuts are made of polytetrafluorethylene.

4. An apparatus for fabricating silica optical fibres as claimed in claim 1 or 2, characterized in that all the parts composing said joints and ring nuts are made of stainless steel.

5. An apparatus for fabricating silica optical fibres as claimed in any of claims 1 to 4, characterized in that said inner tube (TD) is made of quartz.

6. A process for fabricating silica optical fibres by the apparatus as claimed in any of claims 1 to 5, characterized in that said gas mixture is sent into said inner tube (TD) at a flow speed capable to maintain the inner temperature of the tube (TD), in correspondence with the section submitted to heating by the heat source, lower than the fusion temperature of the metallic wool (MA), but sufficient to obtain the reaction.

7. A process for fabricating silica optical fibres as claimed in claim 6, characterized in that said gas mixture contains a halogen and an inert gas in suitable proportions.

8. A process for fabricating silica optical fibres as claimed in claim 6, characterized in that said gas mixture contains a halogen compound and an inert gas in suitable proportions.

## Patentansprüche

1. Vorrichtung zum Herstellen von Lichtleitfasern aus Siliciumdioxid (Silica), die mit Metalloxiden dotiert sind und durch die Synthese von einen niedrigen Dampfdruck aufweisenden Reaktionsstoffen erhalten werden, wobei die Vorrichtung ein Trägerrohr (TQ), in dem die Reaktion unter den im Dampfzustand befindlichen Reaktionsstoffen zur Erzielung des Siliciumdioxids und der Dotierungsstoffe stattfindet und diese Reaktionsprodukte an der Innenfläche des Trägerrohrs niedergeschlagen werden, umfaßt und das Trägerrohr um seine Achse mit Hilfe zweier Verbindungen gedreht wird, die aus einem festen Teil (FA, FB) und einem rotierenden Teil (RA, RB) zusammengesetzt sind und von denen eine der Einführung der Reaktionsstoffe und die andere der Ausstoßung der verbrauchten Gase dient, und die Vorrichtung weiterhin eine Wärmequelle aufweist, die eine Ringzone des Trägerrohrs umgibt und axial verschoben werden kann, dadurch gekennzeichnet, daß sie ein weiteres, inneres Rohr (TD) umfaßt, das innerhalb des Trägerrohrs (TQ) in koaxialer Position angeordnet ist, einen viel kleineren Durchmesser als das Trägerrohr (TQ) hat und einen axialen Schlitz (FE) aufweist, dessen Länge gleich der der Niederschlagungszone des Siliciumdioxids ist und dessen Breite sich in Richtung der Strömung eines von außen kommenden Gasgemischs innerhalb des inneren Rohrs (TD) vergrößert, und daß innerhalb des inneren Rohrs eine Wolle (MA) hoher Reinheit von Drähten des Metalls, dessen Oxid benötigt wird, angeordnet ist und das Gasgemisch eines ist, das mit der Metallwolle unter Bildung von Metalloxid-Vorprodukten reagiert.

2. Vorrichtung zum Herstellen von Lichtleitfasern aus Siliciumdioxid nach Anspruch 1, dadurch gekennzeichnet, daß das innere Rohr (TD) an einer der beiden Verbindungen durch zwei Ringmuttern (GA, GB) montiert ist, die aufeinander geschraubt sind und einen O-Ring (OG), der das Rohr (TD) abdichtet, pressen, wobei eine der Ringmuttern (GA) wiederum auf den festen Teil (FB) der Verbindung geschraubt ist und durch einen O-Ring abgedichtet ist.

3. Vorrichtung zum Herstellen von Lichtleitfasern aus Siliciumdioxid nach Anspruch 1 oder 2, dadurch gekennzeichnet, daß alle die Verbindungen und Ringmuttern zusammensetzenden Teile aus Polytetrafluorethylen bestehen.

4. Vorrichtung zum Herstellen von Lichtleitfasern aus Siliciumdioxid nach Anspruch 1 oder 2, dadurch gekennzeichnet, daß alle die Verbindungen und Ringmuttern zusammensetzenden Teile aus rostfreiem Stahl bestehen.

5. Vorrichtung nach einem der Ansprüche 1 bis 4, dadurch gekennzeichnet, daß das innere Rohr (TD) aus Quarz besteht.

6. Verfahren zum Herstellen von Lichtleitfasern aus Siliciumdioxid mit einer Vorrichtung nach einem der Ansprüche 1 bis 5, dadurch gekennzeichnet, daß man in das innere Rohr (TD) das Gasgemisch mit einer Strömungsgeschwindigkeit leitet, die geeignet ist, die Innentemperatur des inneren Rohrs (TD) in Übereinstimmung mit dem durch die Wärmequelle dem Heizvorgang unterworfenen Abschnitt auf einem Wert zu halten, der zwar niedriger als die Schmelztemperatur der Metallwolle (MA), jedoch ausreichend zum Erhalten der Reaktion ist.

7. Verfahren zum Herstellen von Lichtleitfasern aus Siliciumdioxid nach Anspruch 6, dadurch gekennzeichnet, daß das Gasgemisch ein Halogen und ein inertes Gas in zweckmäßigem Verhältnis enthält.

8. Verfahren zum Herstellen von Lichtleitfasern aus Siliciumdioxid nach Anspruch 6, dadurch gekennzeichnet, daß das Gasgemisch eine Halogenverbindung und ein inertes Gas in zweckmäßigem Verhältnis enthält.

**Revendications**

1. Equipement pour la fabrication de fibres optiques en silice dopée avec des oxydes métalliques, obtenus par synthèse de réactifs à faible tension de vapeur, comprenant un tube support (TQ), où a lieu la réaction entre les réactifs à l'état vapeur pour la production de silice et de dopants qui sont déposés sur la paroi interne du tube support, qui est mis en rotation autour de son axe en utilisant deux joints composés d'une partie fixe (FA, FB) et d'une partie tournante (RA, RB), l'un pour l'injection des réactifs et l'autre pour évacuer les gaz épuisés, et comprenant aussi une source de chaleur, qui entoure une zone annulaire du tube support et qui peut être déplacée en direction axiale, caractérisé en ce qu'il comprend un autre tube interne (TD), placé à l'intérieur du tube support (TQ) en position coaxiale, ayant un diamètre bien plus petit que celui du tube support (TQ) et pourvu d'une fente axiale (FE) dont la longueur est égale à celle de la zone de dépôt de la silice et dont la largeur croît dans le sens dans lequel un mélange gazeux qui provient de l'extérieur afflue à l'intérieur du tube interne (TD), une laine (MA) à haute pureté de fils de métal, dont on désire l'oxyde, étant placée à l'intérieur du tube interne, le mélange gazeux étant apte à entrer en réaction avec la laine métallique pour produire des précurseurs des oxydes métalliques.

2. Equipement pour la fabrication de fibres optiques selon la revendication 1, caractérisé en ce que ledit tube interne (TD) est fixé à l'un desdits joints par deux écrous (GA, GB), qui sont vissés l'un sur l'autre et qui compriment un joint torique (OG) qui serre le tube (TD), un des écrous (GA) étant à son tour vissé à la partie fixe (FB) du joint et rendu étanche par un joint torique.

3. Equipement pour la fabrication de fibres optiques selon la revendication 1 ou 2, caractérisé en ce que toutes les parties qui composent lesdits joints et écrous sont réalisées en polytétrafluoroéthylène.

4. Equipement pour la fabrication de fibres optiques selon la revendication 1 ou 2, caractérisé en ce que toutes les parties constituant lesdits joints et écrous sont fabriquées en acier inoxydable.

5. Equipement pour la fabrication de fibres optiques selon l'une quelconque des revendications 1 à 4, caractérisé en ce que ledit tube interne (TD) est en quartz.

6. Procédé pour la fabrication de fibres optiques par un équipement selon l'une quelconque des revendications 1 à 5, caractérisé en ce que ledit mélange gazeux est envoyé dans ledit tube interne (TD) à une vitesse d'écoulement en mesure de maintenir la température interne au tube interne (TD), en correspondance avec la section soumise à chauffage par la source de chaleur, plus basse que la température de fusion de la laine métallique (MA), mais suffisante pour obtenir la réaction.

7. Procédé pour la fabrication de fibres optiques selon la revendication 6, caractérisé en ce que ledit mélange gazeux se compose d'un halogène et d'un gaz inerte en proportions appropriées.

8. Procédé pour la fabrication de fibres optiques selon la revendication 6, caractérisé en ce que ledit mélange gazeux se compose d'un composé d'halogène et d'un gaz inerte en proportions appropriées.